# EUROPEAN PATENT APPLICATION

(11) **EP 3 608 637 A1**
(43) Date of publication of application: **12.02.2020**
(21) Application number: 18187427.2
(22) Date of filing: 06.08.2018
(51) Int. Cl.: G01D 7/00, B60K 35/00

(54) **LIGHT SYSTEM AND METHOD FOR INDICATING A STATE OF CHARGE OF AN ELECTRIC VEHICLE**

(71) Applicant: DURA Automotive Holdings U.K., Ltd., Birmingham, B35 7AG (GB)
(72) Inventor: DURAND, Eric, 78430 LOUVECIENNES (FR); FARGES, Thomas, 91940 GOMETZ LE CHATEL (FR)
(74) Representative: Cabinet Laurent & Charras

(57) **Abstract**

The invention concerns a light system (10) for indicating a state of charge of an electric vehicle, the light system (10) comprising: at least three light zones (20) including a first light zone (21), a second light zone (22) and a third light zone (23) forming a dynamic display; and a set of diodes (40) for illuminating the light zones (20); wherein the light system (10) has at least three operating modes: a first mode in which the set of diodes (40) illuminate the first light zone (21) in a first color (R); a second mode in which the set of diodes (40) illuminate the first light zone (21) and the second light zone (22) in a second color (Y); and a third mode in which the set of diodes (40) illuminate the first light zone (21), the second light zone (22) and the third light zone (23) in a third color (G). The invention also concerns a method for indicating a state of charge of an electric vehicle.

## Description

### TECHNICAL FIELD OF THE INVENTION

The invention concerns a light system and a method for indicating a state of charge of an electric vehicle.

### BACKGROUND OF THE INVENTION

In the field of electric vehicles, different systems are known to indicate the state of charge of the battery assembly.

US9493078 discloses a system, comprising a charger provided with a light emitting unit for displaying charging operation information. The light emitting unit includes three diodes of different colors.

US8487752 discloses another system, comprising several indicator segments providing various status indications concerning the vehicle.

### SUMMARY OF THE INVENTION

The aim of the invention is to provide another light system, which provides information about the state of charge and which can be integrated to an outer component of the vehicle visible from outside the vehicle.

To this end, the invention concerns a light system for indicating a state of charge of an electric vehicle, the light system comprising:
- at least three light zones including a first light zone, a second light zone and a third light zone forming a dynamic display; and
- a set of diodes for illuminating the light zones.

According to the invention, the light system has at least three operating modes:
- a first mode in which the set of diodes illuminate the first light zone in a first color;
- a second mode in which the set of diodes illuminate the first light zone and the second light zone in a second color; and
- a third mode in which the set of diodes illuminate the first light zone, the second light zone and the third light zone in a third color.

Thanks to the invention, the light system forms a dynamic logo indicating the different levels of charge of the electric battery, in a simple, costless and efficient way. Different flashing patterns of the diodes can be programmed to provide further information about the state of charge.

According to further aspects of the invention which are advantageous but not compulsory, such a system may incorporate one or several of the following features.
- The light system comprises light guides surrounded by the set of diodes, wherein: the first light zone comprises a first light guide, the second light zone comprises a second light guide, and the third light zone comprises a third light guide.
- The light guides and the set of diodes are mounted on a printed circuit board.
- In a first embodiment, the set of diodes comprises: one diode of the first color for illuminating the first light zone in the first mode; two diodes of the second color for illuminating the first light zone and the second light zone in the second mode; three diodes of the third color for illuminating the first light zone, the second light zone and the third light zone in the third mode.
- In a second embodiment, the set of diodes comprises: two diodes of the first color for illuminating the first light zone in the first mode, or the first light zone and the second light zone in the second mode; three diodes of the third color for illuminating the first light zone and the second light zone in the second mode, or the first light zone, the second light zone and the third light zone in the third mode; and wherein in the second mode, a mix of the first color and the third color forms the second color in the first light zone and the second light zone.
- In a preferred embodiment, the light zones are positioned along a straight line. Preferably, the light zones are more extended perpendicular to the straight line than along the straight line.
- In another embodiment, the light zones are positioned along a curved line. Preferably, the light zones are more extended along the curved line than perpendicular to the curved line.
- In a particular embodiment, the set of diodes illuminate the light zones continuously in each of the operating modes.
- In another embodiment, the set of diodes illuminate the light zones discontinuously in each of the operating modes in the first mode.

More precisely, during a battery charging process, in the first mode, the set of diodes illuminate the first light zone in the first color during a predetermined time, then is turned off during a predetermined time, and so on; in the second mode, the set of diodes illuminate the first light zone in the second color during a predetermined time, then the first light zone and the second light zone in the second color during a predetermined time, then is turned off during a predetermined time; and in the third mode, the set of diodes illuminate the first light zone in the third color during a predetermined time, then the first light zone and the second light zone in the third color during a predetermined time, then the first light zone, the second light zone and the third light zone in the third color during a predetermined time, then is turned off during a predetermined time, and so on.

Preferably, all predetermined times are equal.

More preferably, all predetermined times are equal to 1 second.
- In a preferred embodiment, the light system activates the first mode when the state of charge is in a low range, the second mode when the state of charge is in a medium range, and the third mode when the state of charge is in a high range.

For example:
- the low range corresponds to the first third of charge (0-33%),
- the medium range corresponds to the second third of charge (33-66%), and
- the high range corresponds to the third third of charge (66-100%).
- During a battery charging process, the high range can be divided in two sub-ranges: an inferior sub-range in which the set of diodes illuminate the first light zone in the third color during a predetermined time, then the first light zone and the second light zone in the third color during a predetermined time, then the first light zone, the second light zone and the third light zone in the third color during a predetermined time, then is turned off during a predetermined time, and so on; and a superior sub-range in which the set of diodes illuminate the first light zone, the second light zone and the third light zone in the third color during a predetermined short time, then is turned off during a predetermined long time, and so on.

For example:
- the inferior sub-range corresponds to 66-99%,
- the superior sub-range corresponds to 99-100%,
- the predetermined short time is equal to 100 ms,
- the predetermined long time is equal to 2 seconds.
- During a battery charging process, the low range can be divided in two sub-ranges: an inferior sub-range in which the set of diodes illuminate the first light zone in the first color during a predetermined short time, then is turned off during a predetermined short time, and so on; and a superior sub-range in which the set of diodes illuminate the first light zone in the first color during a predetermined short time, then is turned off during a predetermined short time, and so on.

For example:
- the inferior sub-range corresponds to 0-5%,
- the superior sub-range corresponds to 5-33%,
- the predetermined short time is equal to 100 ms,
- the predetermined long time is equal to 1 second.
- Preferably, the light system forms a module designed for illuminating an outer component of the electric vehicle. More preferably, the outer component is located next to the electric charging hatch of the electric vehicle. For example, the component is a B pillar capping. The light system may be provided with a cover designed for mounting in a particular location of the outer component.
- Still preferably, the light system comprises a wall provided with two windows facing the first light zone, two windows facing the second light zone, and two windows facing the third light zone.
- According to a preferred embodiment, the windows are formed directly in the material of the wall. Preferably, the wall comprises an opaque material, and a translucent or transparent material. The windows can be delimited by six parallel grooves formed in the opaque material and covered by the translucent or transparent material.
- According to another embodiment, the wall may comprise a translucent or transparent material which is covered by a sticker comprising six cuts delimiting the windows.

The invention also concerns a method for indicating a state of charge of an electric vehicle, by implementing a light system comprising:
- at least three light zones including a first light zone, a second light zone and a third light zone forming a dynamic display; and
- a set of diodes for illuminating the light zones;
wherein the light system has at least three operating modes:
- a first mode in which the set of diodes illuminate the first light zone in a first color;
- a second mode in which the set of diodes illuminate the first light zone and the second light zone in a second color; and
- a third mode in which the set of diodes illuminate the first light zone, the second light zone and the third light zone in a third color.

### BRIEF DESCRIPTION OF THE DRAWINGS

The invention will now be explained in correspondence with the annexed figures, and as an illustrative example, without restricting the object of the invention. In the annexed figures:
- figure 1 is a perspective view of an outer component of an electric vehicle having a location designed for receiving a light system according to the invention;
- figure 2 is a sectional view of the location along line II-II of figure 1;
- figure 3 is an upper view of the light system according to the invention;
- figure 4 is an outside view of the outer component equipped with the light system operating in a first mode;
- figure 5 is an upper view of the light system operating in the first mode;
- figure 6 is an outside view of the outer component equipped with the light system operating in a second mode;
- figure 7 is an upper view of the light system operating in the second mode;
- figure 8 is an outside view of the outer component equipped with the light system operating in a third mode;
- figure 9 is an upper view of the light system operating in the third mode;
- figure 10 is a view similar to figure 7, showing a light system according to a second embodiment of the invention, operating in the second mode; and
- figures 11, 12 and 13 are views similar to figures 4, 6 and 8, respectively, showing a light system according to a third embodiment of the invention.

### DETAILED DESCRIPTION OF SOME EMBODIMENTS

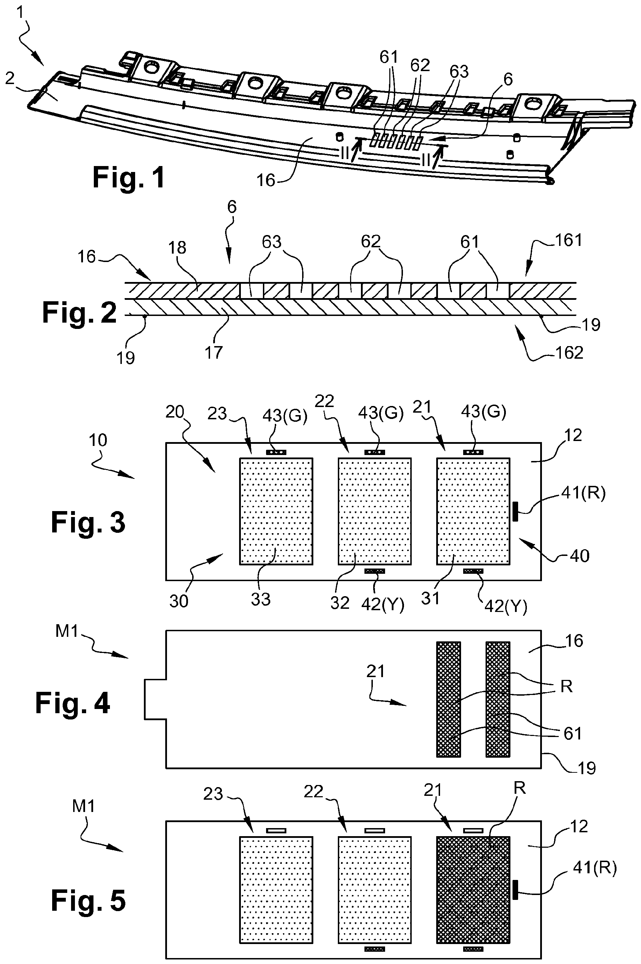

Figures 1 to 9 illustrates a light system (10) according to a first embodiment of the invention, designed for indicating a state of charge of the battery of an electric vehicle (1).

Figure 1 shows an outer component (2) of the vehicle (1), having a location (6) designed for receiving the light system (10). More precisely, the outer component (2) is a B pillar capping. The light system (10), not shown, will be positioned at the location (6), against a wall (16) provided with windows (61, 62, 63).

Figure 2 shows a section of the wall (16) at location (6). The wall (16) has an inner face (161) destined to receive the light system (10) and an outer face (162) oriented outside the vehicle (1). The wall (16) is formed of translucent or transparent material (17) and opaque material (18), for example by bi-material injection. The windows (61, 62, 63) are formed directly in the material of the wall (16). More precisely, the windows (61, 62, 63) are delimited by six parallel grooves formed in the opaque material (18) and covered by the translucent or transparent material (17).

The windows (61, 62, 63) are designed to face different light zones (20) of the light system (10), as described here-below. More precisely, two windows (61) faces the first light zone (21), two windows (62) faces the second light zone (22), and two windows (63) faces the third light zone (23). Preferably, all light zones (20) have the same dimensions, and all windows (61, 62, 63) have the same dimensions.

The outer face (162) of wall (16) is provided with a battery symbol (19) formed by engraving or embossing, as shown in Figures 2 and 4.

Alternately, the wall (16) may be devoid of cuts delimiting the windows (61, 62, 63). For example, the wall (16) may comprise translucent or transparent material (17) covered by a sticker comprising six cuts delimiting the windows (61, 62, 63).

Figure 3 shows constitutive elements (12, 30, 40) of the light system (10), more precisely light guides (30) and diodes (40) mounted on a printed circuit board (12).

The light system (10) defines three light zones (20) including a first light zone (21), a second light zone (22) and a third light zone (23) forming a dynamic display. The first light zone (21) comprises a first light guide (31). The second light zone (22) comprises a second light guide (32). The third light zone (23) comprises a third light guide (33).

The light guides (30), and consequently the light zones (20), are positioned along a straight line. Preferably, the light guides (30) and light zones (20) are more extended perpendicular to the straight line than along the straight line.

The light guides (30) are surrounded by the set of diodes (40), designed for illuminating the light zones (20) with different colors (R, Y, G). A red diode (41), a yellow diode (42) and a green diode (43) are placed next to the first light guide (31). A yellow diode (42) and a green diode (43) are placed next to the second light guide (32). A green diode (43) is placed next to the third light guide (32).

The windows (61) are positioned above the light guide (31), the windows (62) are positioned above the light guide (32), and the windows (63) are positioned above the light guide (33). Thus, the colors (R, Y, G) are visible through the windows (61, 62, 63) from outside the vehicle (1).

According to the invention, the light system (10) is programmed with three operating modes (M1, M2, M3).

Figures 4 and 5 show a first mode (M1), in which the red diode (41) illuminates the first light zone (21) and the two windows (61) in a red color (R).

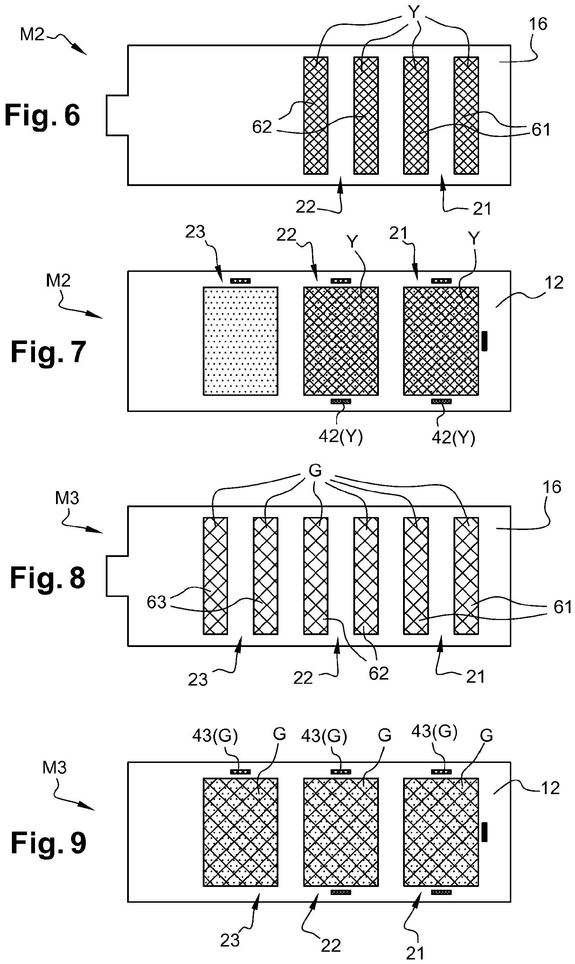

Figures 6 and 7 show a second mode (M2), in which the yellow diodes (42) illuminate the first and second light zones (21, 22) and the four windows (61, 62) in a yellow color (Y).

Figures 8 and 9 show a third mode (M3), in which the green diodes (43) illuminate the first, second and third light zones (21, 22, 23) and the six windows (61, 62, 63) in a green color (G).

Thus, the light system (10) can illuminate the outer component (2), by forming a dynamic logo which indicates the different levels of charge of the electric battery. Thanks to the six windows (61, 62, 63), the dynamic logo comprises six bars indicating three levels of charge. Different flashing patterns of the diodes (40) can be programmed to provide further information about the state of charge.

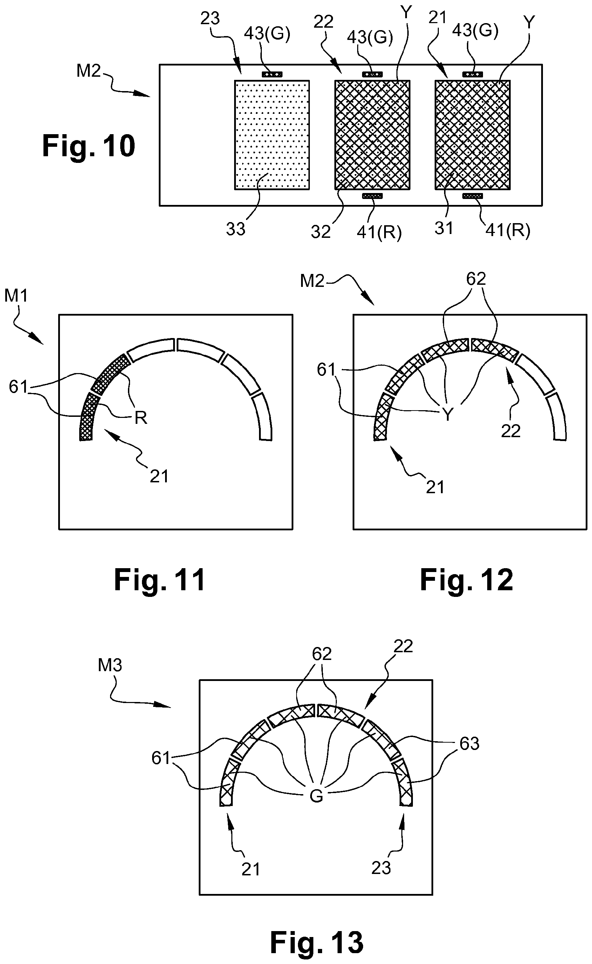

Other embodiments of the invention are represented on figures 10 to 13. In these embodiments, elements similar to the first embodiment have the same references and work in the same way. Only the differences with respect to the first embodiment are described hereafter.

Figure 10 shows a light system (10) according to a second embodiment of the invention, wherein the set of diodes (40) comprises only five diodes (40), more precisely two red diodes (41) and three green diodes (43), without yellow diode.

In the first mode (M1) not shown, the first zone (21) is illuminated by a red diode (41).

In the second mode (M2), each of the first and second zones (21, 22) is illuminated by a red diode (41) and a green diode (43). The mix of red color (R) and green color (G) illuminate the first and second zones (21, 22) with a yellow color (Y).

In the third mode (M3) not shown, each of the first, second and third zones (21, 22, 23) is illuminated by a green diode (43).

Figures 11 to 13 shows a light system (10) according to a third embodiment of the invention, wherein the light zones (20) are positioned along a curved line. The light system (10) is programmed with three operating modes (M1, M2, M3), as described here-above. Preferably, the light zones (20) are more extended along the curved line than perpendicular to the curved line.

Other non-shown embodiments can be implemented within the scope of the invention.

For example, the light system (10) can have four light guides (30) defining four light zones (20), or more than four light guides (30) defined more than four light zones (20). The diodes (40) are arranged around the light guides (30) accordingly.

In addition, technical features of the different embodiments can be, in whole or part, combined with each other. Thus, the light system (10) can be adapted to the specific requirements of the application.

## Claims

1. A light system (10) for indicating a state of charge of an electric vehicle (1), the light system (10) comprising:
- at least three light zones (20) including a first light zone (21), a second light zone (22) and a third light zone (23) forming a dynamic display; and
- a set of diodes (40) for illuminating the light zones (20);
wherein the light system (10) has at least three operating modes (M1, M2, M3):
- a first mode (M1) in which the set of diodes (40) illuminate the first light zone (21) in a first color (R);
- a second mode (M2) in which the set of diodes (40) illuminate the first light zone (21) and the second light zone (22) in a second color (Y); and
- a third mode (M3) in which the set of diodes (40) illuminate the first light zone (21), the second light zone (22) and the third light zone (23) in a third color (G).

2. The light system (10) according to claim 1, comprising light guides (30) surrounded by the set of diodes (40), wherein:
- the first light zone (21) comprises a first light guide (31),
- the second light zone (22) comprises a second light guide (32), and
- the third light zone (23) comprises a third light guide (33).

3. The light system (10) according to claim 2, wherein the light guides (30) and the set of diodes (40) are mounted on a printed circuit board (12).

4. The light system (10) according to any one of the previous claims 1 to 3, wherein the set of diodes (40) comprises:
- one diode (41) of the first color (R) for illuminating the first light zone (21) in the first mode (M1);
- two diodes (42) of the second color (Y) for illuminating the first light zone (21) and the second light zone (22) in the second mode (M2);
- three diodes (43) of the third color (G) for illuminating the first light zone (21), the second light zone (22) and the third light zone (23) in the third mode (M3).

5. The light system (10) according to any one of the previous claims 1 to 3, wherein the set of diodes (40) comprises:
- two diodes (41) of the first color (R) for illuminating the first light zone (21) in the first mode (M1), or the first light zone (21) and the second light zone (22) in the second mode (M2);
- three diodes (43) of the third color (G) for illuminating the first light zone (21) and the second light zone (22) in the second mode (M2), or the first light zone (21), the second light zone (22) and the third light zone (23) in the third mode (M3);
and wherein in the second mode (M2), a mix of the first color (R) and the third color (Y) forms the second color (Y) in the first light zone (21) and the second light zone (22).

6. The light system (10) according to any one of the previous claims 1 to 5, wherein the light zones (20) are positioned along a straight line.

7. The light system (10) according to any one of the previous claims 1 to 5, wherein the light zones (20) are positioned along a curved line.

8. The light system (10) according to any one of the previous claims 1 to 7, wherein the set of diodes (40) illuminate the light zones (20) continuously in each of the operating modes (M1, M2, M3).

9. The light system (10) according to any one of the previous claims 1 to 7, wherein during a battery charging process:
- in the first mode (M1), the set of diodes (40) illuminate the first light zone (21) in the first color (R) during a predetermined time, then is turned off during a predetermined time, and so on;
- in the second mode (M2), the set of diodes (40) illuminate the first light zone (21) in the second color (Y) during a predetermined time, then the first light zone (21) and the second light zone (22) in the second color (Y) during a predetermined time, then is turned off during a predetermined time; and
- in the third mode (M3), the set of diodes (40) illuminate the first light zone (21) in the third color (G) during a predetermined time, then the first light zone (21) and the second light zone (22) in the third color (G) during a predetermined time, then the first light zone (21), the second light zone (22) and the third light zone (23) in the third color (G) during a predetermined time, then is turned off during a predetermined time, and so on.

10. The light system (10) according to any one of the previous claims, wherein the light system (10) activates:
- the first mode (M1) when the state of charge is in a low range,
- the second mode (M2) when the state of charge is in a medium range, and
- the third mode (M3) when the state of charge is in a high range.

11. The light system (10) according to claim 10, wherein during a battery charging process, the high range is divided in two sub-ranges:
- an inferior sub-range in which the set of diodes (40) illuminate the first light zone (21) in the third color (G) during a predetermined time, then the first light zone (21) and the second light zone (22) in the third color (G) during a predetermined time, then the first light zone (21), the second light zone (22) and the third light zone (23) in the third color (G) during a predetermined time, then is turned off during a predetermined time, and so on; and
- a superior sub-range in which the set of diodes (40) illuminate the first light zone (21), the second light zone (22) and the third light zone (23) in the third color (G) during a predetermined short time, then is turned off during a predetermined long time, and so on.

12. The light system (10) according to any one of claims 10 or 11, wherein during a battery charging process, the low range is divided in two sub-ranges:
- an inferior sub-range in which the set of diodes (40) illuminate the first light zone (21) in the first color (R) during a predetermined short time, then is turned off during a predetermined short time, and so on; and
- a superior sub-range in which the set of diodes (40) illuminate the first light zone (21) in the first color (R) during a predetermined short time, then is turned off during a predetermined short time, and so on.

13. The light system (10) according to any one of the previous claims, forming a module for illuminating an outer component (2) of the electric vehicle (1).

14. The light system (10) according to any one of the previous claims, comprising a wall (16) provided with two windows (61) facing the first light zone (21), two windows (62) facing the second light zone (22), and two windows (63) facing the third light zone (23).

15. A method for indicating a state of charge of an electric vehicle (1), by implementing a light system (10) comprising:
- at least three light zones (20) including a first light zone (21), a second light zone (22) and a third light zone (23) forming a dynamic display; and
- a set of diodes (40) for illuminating the light zones (20);
wherein the light system (10) has at least three operating modes (M1, M2, M3):
- a first mode (M1) in which the set of diodes (40) illuminate the first light zone (21) in a first color (R);
- a second mode (M2) in which the set of diodes (40) illuminate the first light zone (21) and the second light zone (22) in a second color (Y); and
- a third mode (M3) in which the set of diodes (40) illuminate the first light zone (21), the second light zone (22) and the third light zone (23) in a third color (G).
